Europäisches Patentamt

**European Patent Office**

**Office européen des brevets**

(11) Publication number: **0 023 053**

A1

(12) **EUROPEAN PATENT APPLICATION**

(21) Application number: **80104373.8**

(22) Date of filing: **24.07.80**

(51) Int. Cl.³: **B 32 B 27/12**
A 47 C 7/18, B 60 R 13/02
B 29 D 27/04

(30) Priority: **24.07.79 IT 2458579**

(43) Date of publication of application:
**28.01.81 Bulletin 81/4**

(84) Designated Contracting States:
**DE FR GB**

(71) Applicant: **Industrie Pirelli S.p.A.
Piazza Duca d'Aosta 3
I-20100 Milan(IT)**

(72) Inventor: **Angioletti, Attilio
Via Mameli, 10
Milan(IT)**

(74) Representative: **Dr. E. Wiegand Dipl.-Ing. Niemann Dr.
M. Kohler
Dipl.-Ing. C. Gernhardt Dipl.-Ing. J. Glaeser
Patentanwälte Herzog-Wilhelm-Strasse 16
D-8000 München 2(DE)**

(54) **Foam material article provided with a covering, manufacturing process and device for realizing it.**

(57) A foam material article (1) provided with a covering comprising a fabric (4) and a layer (5) of a material impermeable to air. Elastic binding means are provided between the fabric and the material impermeable to air. Said elastic binding means can, for example, comprise an adhesive. Thereby sufficient reciprocal movement between the fabric and the material impermeable to air is possible so that the manufacture of the article is facilitated and wear is reduced.

Fig. 2

EP 0 023 053 A1

FOAM MATERIAL ARTICLE PROVIDED WITH A COVERING,
MANUFACTURING PROCESS AND DEVICE FOR REALIZING IT

The present invention refers to a foam material article provided with a covering, to its manufacturing process and to a device for carrying out said process. In particular, as far as the articles in foam material are concerned, the present invention refers, in particular, to paddings – such as, for example: seat bodies or car seat  back rests, furnished with a covering of the type that comprises a fabric and a layer impermeable to air and doubled-up on the fabric itself.

Articles in foam material that are provided with a covering made of a fabric which is at least partially embedded in or at least intimately connected to a layer of material impermeable to air are already known.

This layer of the material impermeable to air is necessary for manufacturing the article itself, since said articles are obtained through processes which foresee vacuum forming of the fabric itself in a mould, prior to the expanding of the expandable material.

This layer of material impermeable to air – as a result of the vacuum created inside the mould, allows the fabric (which is not per se impermeable to air) to adhere perfectly to the mould walls, so that a greater adherence to the shapes of the finished article is provided, eliminating the formation of unattractive wrinkles in the covering itself.

Moreover, this layer impermeable to air prevents the expandable material from penetrating through the fabric and emerging beyond surface of the article covered by the fabric during the phase of expansion of the expandable material.

During the manufacture of the article in foam material, the fact that the fabric and the layer of the material impermeable to air are firmly connected to each other, causes considerable drawbacks.

As a matter of fact, the fabric and the material impermeable to air have different forming or moulding capacities – even if the material impermeable to air is normally heated, before forming the vacuum in the mould, to render it plastically deformable.

In fact, since the fabric itself is more deformable than the material impermeable to air the latter hinders the deformation of the fabric.

From this arises the necessity to create a greater vacuum in the mould so that greater forces are applied to the fabric, with consequent greater deformations. Lesser thickness is obtained in the covering of the finished article, and hence, there is an increased tendency for the fabric of the finished product to become worn out.

For obviating this drawback, there can be employed fabrics having greater elasticity, but to obtain this, it is necessary to use fabrics made with elastic fibres, which, however, are less resistent to wear than normal fabrics, or to use a fabric having a softer structure, in which case, the wear of the fabric of the finished article is enhanced.

Moreover, in the finished article, the layer of the material impermeable to air causes considerable drawbacks because the impregnation of the fabric by said layer prevents transpiration, i.e. the passage of air and humidity through the fabric, and this gives to the user a great sense of descomfort, especially when he must remain in contact with the article for a long time.

What is more, in the known foam material articles, there is a considerable problem with regard to early wear of the covering fabric, especially at those areas where, owing to the particular shape of the article, the fabric is more stretched and is consequently of lesser thickness. Considering that these areas are also those that are normally exposed to greater wear, there results a much shorter service-life for the entire article.

An aim of the present invention is to provide a process that eliminates the necessity of embedding or rendering intimately connected, the covering fabric with the layer of the material impermeable to air so as to exploit to the maximum, during the manufacture of the article, the different characteristics of deformability of the fabric and of the material impermeable to air to allow a greater transpirability between the user and the article, and to provide a device for performing the above mentioned process.

One object of the present invention is a foam material article provided with a cover of the type comprising a fabric and a layer of a material impermeable to air, characterized by the fact of comprising elastic binding means between the fabric and the material impermeable to air.

A further object of the present invention is a process for manufacturing foam material articles, provided with a cover and comprising a fabric and a layer of a material impermeable to air, characterized by the fact of comprising the steps of:

a) placing a piece of fabric in a mould,

b) depositing an adhesive on said fabric,

c) doubling the fabric with a sheet of a material impermeable to air,

d) causing the fabric to line the mould by creating a vacuum in the mould,

e) inserting the expandable material, and

f) expanding said expandable material.

Another object of the present invention is a mould for manufacturing foam material articles, provided with a cover, comprising a fabric and a layer of a material impermeable to air, said mould comprising a cavity, means for forming a vacuum inside said cavity and a cover for air-tight closing of said cavity, characterized by the fact of comprising consecutively, starting from the cavity itself, a continuous relief around said cavity and a frame associated to said mould, each side of said frame being substantially parallel to the sides of said cavity, each side of said frame being provided with at least one roller.

The present invention will be better understood in the following detailed description made by way of nonlimiting example, with reference to the figures in the attached sheets of drawings, wherein:

FIG. 1 - shows in perspective view a cross section of a part of an article in foam material according to the present invention.

FIG. 2 - shows an enlargement of the detail-II of FIG. 1.

FIG. 3 - shows an enlargement of a different embodiment of detail-II of FIG. 1.

FIG. 4 - shows a perspective view of a mould according to the present invention.

FIG. 5 - shows an enlargement of section V-V of FIG. 4.

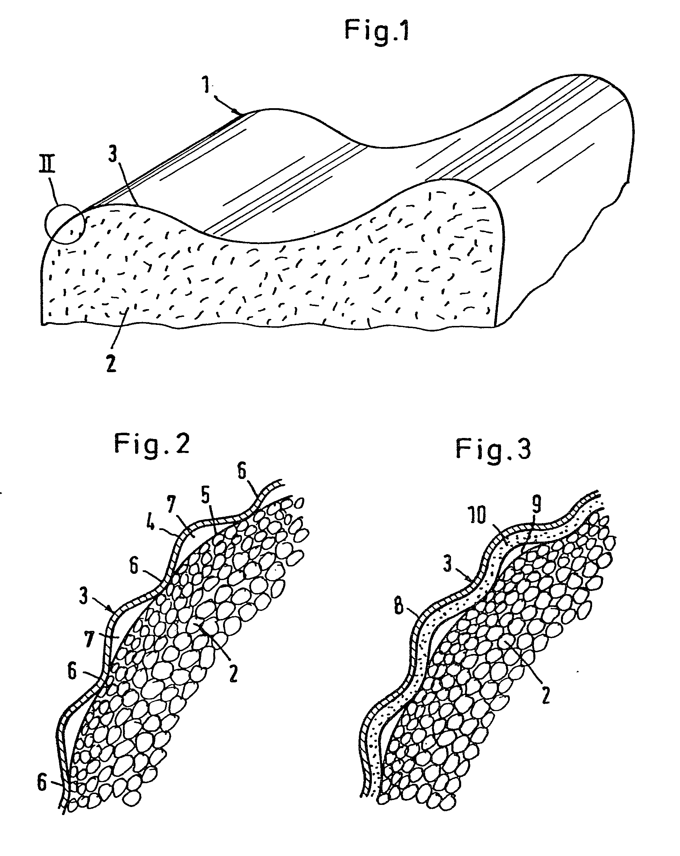

In FIG. 1 there is shown in perspective view a cross section of a portion of an article 1 made of foam material, such as for example, a car seat.

Said article 1 comprises a central body 2 of foam material, such as for example, polyurethane foam.

Said central body 2 is provided with a covering 3.

In the more general idea of solution, according to the present invention of a foam material article provided with a covering formed by a fabric and by a sheet of material impermeable to air, said article comprises elastic binding means between said fabric and said material impermeable to air.

A particular solution of said more general idea is shown in FIG. 2, which shows an enlargement of detail-II of FIG. 1.

Said FIG. 2 shows a fabric 4 connected through elastic means to a sheet 5 of material impermeable to air covering the central foam body 2 of the article 1.

The fabric 4 (thanks to the particular process which shall be described in detail further on) can be of any whatsoever yarn or the like as long as it consists of a knitted fabric.

The sheet 5 of material impermeable to air is preferably a film of plastic material of the blown type, such as for example, polyvinyl chloride having non-oriented molecular chains and hence having a perfect isothropy.

Said elastic binding means comprise in the particular solution shown in said FIG. 2, an adhesive put between the fabric 4 and the material 5 impermeable to air, that presents characteristics of elasticity successive to its reticulation.

Said adhesive is interposed between fabric 4 and the material 5 impermeable to air, either where said elements are in direct contact with each other (zone indicated with the reference numeral 6), or where said elements are not in direct contact (zone indicated with the reference numeral 7).

In this way, the adhesive forms an elastic bridge between said fabric 4 and the material 5 impermeable to air.

Said elastic binding means can likewise comprise, as an alternative or jointly with said adhesive, microcreases in the fabric 4 itself (the corrugations present in the fabric 4 in correspondence of the zone 7).

In fact, as can easily be seen in FIG. 2, the fabric 4 does not as in the prior art adhere continuously to the layer 5 of the material impermeable to air, but it has a greater length with respect to said material 5 impermeable to air if equal tracts of covering 3 are considered.

Thus, microcreases are obtained which allow for a greater elasticity in the binding between the said fabric 4 and said material 5 impermeable to air.

As an elastic connection or binding in the present invention is intended a connection which allows, when subjected to stresses, a certain amount of freedom i.e. the possibility of a reciprocal movement between two elements and in particular between the fabric 4 and the material 5 impermeable to air, and, when the stresses cease, the return of said elements to their initial rest position.

As previously stated, the fabric 4 which is used for the covering 3 of article 1, according to the present invention, can be of any whatsoever type.

In particular, there can be used fabrics 4 of the so-called differential return-stretch type, i.e. fabrics that are easily deformable, but which have a reduced elastic return after deformation.

Moreover, the fabrics 4 utilized are characterized by two qualities which influence, as far as regards the particular application according to the present invention is concerned, both the type of adhesive to be used, as well as the operation of the device for manufacturing said articles, as it shall be described further on.

Said characteristics are the elasticity and the thickness of the fabric 4. The former indicates the ratio between the deformation of the fabric 4 during vacuum forming and its successive shrinkage once the said vacuum forming phase is ended. The latter concerns the quantity of the material present in the fabric 4 itself relative to a standard dimension, such as for example, a square meter. Consequently, it gives an indication of the capacity of the fabric 4 to cover the article 1 even in those parts where the article has a more changing form, and therefore, the fabric 4 itself becomes more taut to closely follow the shape of the article 1.

These two characteristics of the fabric 4 determine the type of adhesive that must be used for realizing the elastic bridge between the fabric 4 itself and the sheet 5 of the material impermeable to air.

Purely by way of example, shall now be given herebelow, two examples of adhesives for forming the elastic bridge between the fabric 4 and the material impermeable to air, as a function of the characteristics mentioned before EXAMPLE 'A' - FABRIC HAVING THE FOLLOWING CHARACTERISTICS:

material ...... polyamide
structure ...... knitted fabric
stretch (with load of 4 kg/200 mm)
...... weft 75 %
...... warp 35 %
weight ...... 200 gr/m$^2$

An adhesive for forming the elastic bridge can be a linear polyurethane polymer dissolved in a solvent and cross-linked with isocyannate, such as for example, the products DESMOCOLL and DESMODUR, manufactured and sold by BAYER AKTIENGESELLSCHAFT.

EXAMPLE 'B' - FABRIC HAVING THE FOLLOWING CHARACTERISTICS:

material ...... polyamide
structure ...... knitted fabric
stretch (with load of 4 kg/200 mm)
...... weft 30 %
...... warp 6 %
weight ...... 500 gr/m$^2$

An adhesive for forming the elastic bridge can be a solution of a linear polyurethane polymer and chlorinated rubber dissolved in solvent and eventually cross-linked with isocyanate.

In particular, for the linear polyurethane polymer can be utilized the products DESMOCOLL and DESMODUR manufactured and sold by BAYER AKTIENGESELLSCHAFT, and for the chlorinated rubber, the product PERGUT manufactured and sold also by BAYER AKTIENGESELLSCHAFT, can be used.

An alternative embodiment of a foam material article provided with a covering according to the present invention, is shown in FIG. 3.

FIG. 3 is an enlarged view of an alternative embodiment of detail-II of FIG. 1 i.e. of the covering of a foamed article 1.

Said alternative embodiment foresees that the side of a fabric 8 facing a sheet of material 9 impermeable to air, is covered by a layer 10 of foamed material, such as for example, a polyurethane foam.

In this particular case, among the elastic means for connecting together the fabric 8 and the material 9 impermeable to air, there can be comprised, besides the adhesive and the microcreases present in the fabric 8, also the layer 10 of foam material.

In fact, said layer 10 which is elastically deformable in its own and the adhesive, allow the formation of those elastic bridges which guarantee a degree of freedom, i.e. the possibility of a relative reciprocal movement between said fabric 8 and the material 8 impermeable to air.

In this particular case, an adhesive for forming said elastic bridges can for example be a linear polyurethane, having a strong tendency to crystallize cross-linked with isocyanide, such as for example, DESMOCOLL 400T manufactured and sold by BAYER AKTIENGESELLSCHAFT.

This adhesive can present elasticity characteristics which are less marked, since it is linked to the layer 10 of foam material that already has, of its own, good elasticity characteristics.

In this manner, with reference also to the previously described examples, it can be seen how, by appropriately varying the characteristics of the fabric and of the adhesive, and eventually by inserting the layer 10 of foam material in contact with the fabric 8, the global characteristics of the elastic bridges between the fabric and the material impermeable to air, and as a consequence, the possibility of a reciprocal movement between said fabric and said material impermeable to air can remain constant and, in particular, can have the best possible value in relation to the global characteristics of the covering of the finished article.

Moreover, by placing said material impermeable to air further away from the fabric the transpirability between the user and the fabric is favoured.

Comprised within the scope of the present invention is also a process for manufacturing a foam material article provided with a covering, as described before. Said process comprises the steps of:-
- placing a piece of fabric inside the mould;
- depositing on said fabric an adhesive, for example by spraying;
- doubling a sheet of material impermeable to air on the fabric;
- making the assembly "fabric-adhesive sheet impermeable to air" line the walls of the mould by forming a vacuum within the mould;
- inserting the expandable material;
- expanding said expandable material.

According to a variation in the process just described, said process comprises moreover, the further step of depositing a further layer of adhesive (for instance by means of spraying) on the sheet of the material impermeable to air either immediately after the formation of the vacuum in the mould, or before the formation of said vacuum, thus facilitating the adhesion of the foam material to said sheet impermeable to air.

Moreover, in the adhesive sprayed on the sheet of the material impermeable to air, there can also be present catalysing agents for inter-acting with the expandable material so as to form a catalytic barrier of collapsed cells of said expandable material.

Said barrier is such as to form a skin that forms together with the sheet of the material impermeable to air an obstacle for the expandable material for preventing it from penetrating into the fabric.

In this particular case, the sheet of the material impermeable to air, thanks to the presence of said barrier of collapsed cells, can be formed by a much thinner sheet than in the previous case, having only the function of preventing the passage of air.

The function of mechanically resisting the passage of the expandable material, so as to prevent it from going through the fabric, would in this case be effected jointly, both by the sheet of the material impermeable to air and by the barrier of collapsed cells.

The catalysing agents for this purpose can be, for example, organic tin salts and/or aliphatic amines.

In this case, moreover, there can be introduced into the adhesives deposited on the fabric and/or on the sheet of the material impermeable to air, but particularly on the former, agents which interact with the material forming the sheet of the material impermeable to air in the periods following the extraction of said article from the mould, thus, interrupting the physical continuity of said sheet, and increasing as a consequence the transpirability of the covering itself.

Preferably, prior to the step of making the assembly "fabric-adhesive sheet impermeable to air" contact the walls of the mould, the sheet of the material impermeable to air can be rendered plastic, i.e. it can be brought to a certain degree of softness, so as to increase its capacity to follow the profile, even if very unequal, of the mould walls, by heating.

Said heat can be supplied, for example, through infrared lamps, or by means of blowing with hot air.

What is more, the process according to the present invention comprises the further step of cross-linking at least the first adhesive placed between the fabric and the sheet of the material impermeable to air after the step of expanding the expandable material.

Preferably, said cross-linking is completed in a period successive to the extraction of the foam material article from the mould itself, for example, within 24 hrs. after extracting the article from the mould.

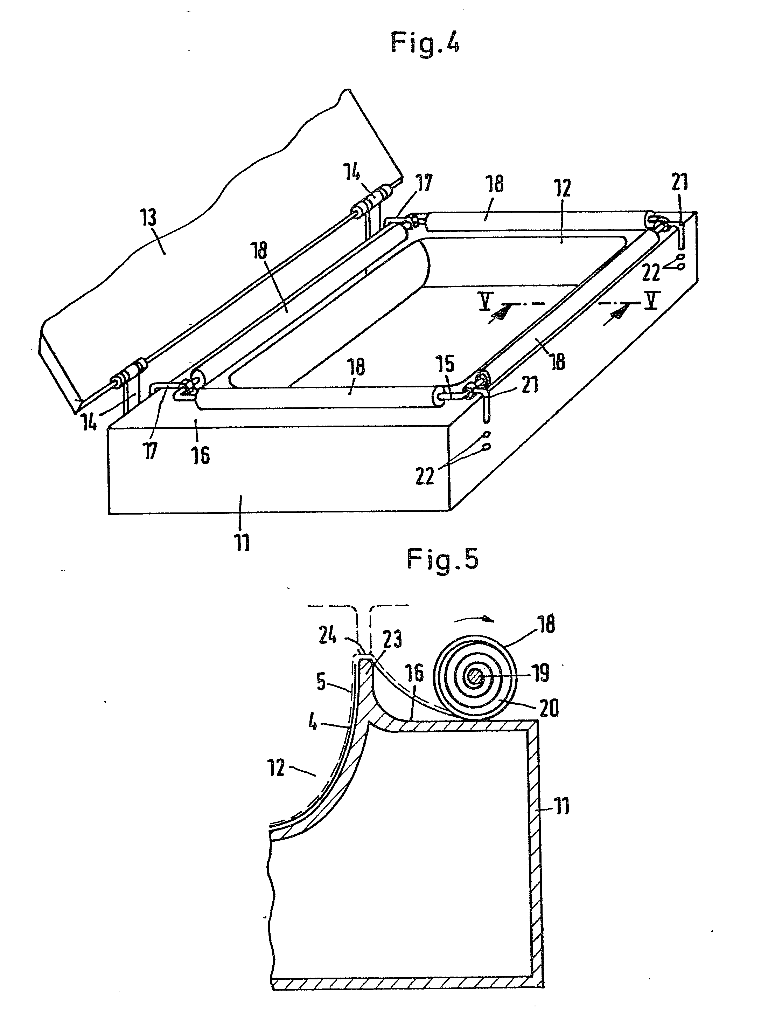

A mould according to the present invention, for putting into effect the process just described, is shown in perspective in FIG. 4.

In said figure, there is shown the mould in perspective and in its open position.

Said mould comprises a body 11 and a cavity 12 inside of which through known means, a vacuum can be obtained, and inside of which the foam material article is formed.

Said mould is furnished with a covering 13 (a part of which is removed in the figure) connected, for example, by means of hinges 14, to one side of said mould.

Besides this, said mould is provided with a rigid frame 15, the sides of which are substantially parallel to the sides of the said cavity 12 and to the body 11 which can be raised with respect to the upper surface 16 of the said body 11.

In particular, said frame 15 can rotate by means of appropriate hinge-joints 17, with respect to one side of the mould itself.

Said frame 15 is provided with rollers 18, one at each side of the frame itself. Said rollers 18 (see FIG. 5) are provided with elastic means which hinder their rotation around their own axis 19.

Said means can be, for example, one or more spiral springs 20 which are placed coaxially to each roller 18.

Said elastic means, which are associated to opposite pairs of rollers, can have different elasticity for each pair, for eventually compensating differences in the stretchability of the fabric (the more rigid springs opposing the stretch in the more stretchable direction of the fabric).

Moreover, said rollers 18 are furnished with known mechanical means (not shown in the figures) that can limit the rotation around their own axis 19 after the roller 18 itself has effected a pre-determined rotation.

The frame 15 is, moreover, furnished with known means (not shown in the figures) for controlling the pressure exercised by the frame 15 on the surface 16, and with means for blocking the said frame 15 to the mould 11 itself.

Said blocking means can be, for example, flexible but inextensible strips 21 connected to the frame 15 and provided with a hole in which one of a series of pins 22, present on one lateral wall of the mould 11, can be inserted.

To maintain the vacuum inside said cavity 12, it is necessary to effect an air-tight seal between the cavity 12 and the layer of the material 5 impermeable to air.

Said seal is obtained by means of the joint operation of the rollers 18 associated to the frame 15 and a continuous projection 23 (see FIG. 5) present on the edge of the cavity 12 that extends in cantilever fashion from surface 16.

The summit 24 of this projection forms, together with the summit of a similar profile (shown with a broken-line in FIG 5) present on the covering 13, the ledge for hermetically closing the mould when the expansion of the expandable material takes place.

To effect said seal, the assembly 'fabric-adhesive material impermeable to air' is pressed by the rollers 18 against surface 16 so that said assembly becomes stretched between the rollers 18 and the projection 23 by the vacuum formed inside cavity 12.

In this manner, it is the material 5 impermeable to air (broken-line in the figure) that, being stretched while it slips over said projection 23, effects the seal against the corners of the summit 24 of the said projection 23.

A supplementary seal is effected in the point of contact between the rollers 18 and surface 16.

The operation of the mould just described, while carrying out a particular form of realization of the process according to the present invention, is as follows:

Starting from the open mould position, with the frame 15 raised, a piece of fabric is spread over the mould itself.

Said piece of fabric can be disposed, if it does not have an isotropic stretch, with its own more stretchable direction in the same sense as that in which the seat to be produced has the most irregular form, i.e. the same direction in which the mould is more drawn.

Said more stretchable direction of the fabric (the weft in examples 'A' and 'B' previously given) is hence disposed parallel to the cavity sides which are parallel to the most drawn direction of the mould itself.

Over said piece of fabric is sprayed by known means a layer of adhesive, and hence a thin sheet of a material impermeable to air is doubled over the fabric itself.

Said piece of fabric and said thin sheet of the material impermeable to air can be placed in the mould, at the same time already provided with the layer of adhesive which can be deposited on their facing surfaces previously.

At this time frame 15 is closed by making it rotate with respect to the hinged-joint 17, which connects it to the mould itself and by blocking it into position by means of the strips 21.

Depending upon the type of fabric used, the mechanical means for limiting the rotation of the rollers 18 around their axis of rotation 19 are regulated.

After that the sheet of the material impermeable to air is heated, for example, through infrared lamps, which render said material impermeable to air in a substantially soft state.

There is now generated by known means the vacuum in the cavity 12, and as a consequence, the fabric which was doubled with the sheet of the material impermeable to air becomes drawn into said cavity 12 until it is substantially brought into contact with the walls of said cavity 12.

In this moment the microcreases are formed in the fabric itself. While the fabric and the sheet of the material impermeable to air are being drawn into the cavity 12, the pressure exercised by the rollers 18 upon the 'fabric-adhesive material impermeable to air' assembly, causes said rollers 18 to start rotating around their axis 19 in the direction indicated by the arrow in FIG. 5.

The resistance opposed by the springs 20 to the rotation of the rollers 18 will gradually increase until the rollers arrive at the stop, and from this moment onwards, the assembly 'fabric-adhesive material impermeable to air' will slip between the rollers 18 and the surface 16, till it comes into contact with the walls of the cavity 12.

The freedom of differentiated deformation between the fabric and the material impermeable to air is maintained during the drawing into the cavity 12, even in the presence of the frame 15 provided with rollers 18.

In fact, two different frictional co-efficients are had, one between the fabric and the surface 16, and the other between the sheet of the material impermeable to air and the rollers 18.

What is more, the first of the relative motions, i.e. the one between the fabric and surface 16, brings about a sliding friction, whereas the second one, e.g. the motion between the sheet of the material impermeable to air and the rollers 18 brings about a rolling friction.

As a consequence, the freedom of relative movements and of differentiated deformations is guaranteed even in the presence of the frame 15.

Moreover, the layer of adhesive between the fabric and the sheet of the material impermeable to air forms a lubricating layer that favours even more said freedom.

At this time the sheet of the material impermeable to air is sprayed with a further layer of adhesive, the expandable material is introduced into the mould and then the covering of the mould is closed.

The introduction of the expandable material into the cavity 12 lined by the assembly 'fabric-adhesive material impermeable to air-adhesive' can be carried out after the closing of the mould if the mould covering itself is provided with means for introducing said expandable material.

With the mould closed, there is effected the expansion and the cross-linking of the expandable material through the means of heat, provided, for example, by the expansion of the same expandable material.

After a sufficient period of time for the expansion and cross-linking of said expandable material, the mould is opened and the foam material article provided with its covering is extracted from the cavity 12 of the mould.

At this time, the cross-linking at least of the layer of adhesive placed between the fabric and the material impermeable to air has not yet taken place completely.

The edges of the fabric that are found outside the cavity 12 and, in particular, which are inserted between the rollers 18 und the surface 16 can be adhered to the sides of the foam material article that was in contact with the covering 13 of the mould through the use of appropriate adhesives, or, as an alternative, they can be trimmed and blocked against the article itself with known means.

The foam material article thus obtained is then subjected to a mangling operation by making it pass through two rollers, at least one of which can be provided with needle-shaped protuberances for piercing the sheet of the material impermeable to air.

The passage between the two rollers, moreover, has the purpose of breaking the cells of foam material so as to furnish a greater transpirability to the article itself.

The use of a roller, provided with needle-sharp projections, can be particularly useful, especially when in the adhesive desposed on the sheet of the material impermeable to air there is present a catalysing agent for forming the catalytic barrier previously described.

As can be deduced from the previous description, with an article in foam material provided with a covering according to the present invention, the prefixed aims are obtained.

In fact, the covering of said foam material article can be more rich or thick and provide thus a greater covering of the article itself, both because of the greater length that it has (due to the microcreases in the fabric itself) as well as the possibility of using heavier fabrics.

From this, there is had a greater resistance to wear, and hence a longer service-life.

Moreover, the presence of elastic bridging means between the material impermeable to air and the fabric itself, i.e. adhesive and/or the eventual microcreases present in said fabric, favour the resistance to wear, since they consent for relative micromovements between the user and the fabric, without giving rise to immediate slipping between the two contacting surfaces.

The presence of the elastic bridges thus realized increases the distance between said layer of material impermeable to air and the fabric, favouring a greater transpirability in the covering itself.

Besides this, the transpirability is also favoured by the catalytic barrier that, allowing the use of a film of a material impermeable to air of lesser thickness, permits with facility the interruption of the continuity of said film through the operation of mangling or through the attack of chemical agents present within the adhesive.

The process according to the present invention guarantees the realization of the advantages described above, derived from the presence of the elastic bridge between the material impermeable to air and the fabric.

In fact, the process consents the free deformation both of the fabric as well as of the sheet of the material impermeable to air, thanks to the adhesive layer interposed between the two surfaces in question.

In fact, said adhesive, not being cross-linked, but still being in a liquid state, acts as a lubricant between said two surfaces when each one of these tends to shift    within the mould for better adapting to the form of the mould itself.

Each of the two layers can thus become deformed in the manner that is more suitable to its characteristics, without being subjected to restriction or to restraints on the part of the other layer.

The placing of the further layer of adhesives between the sheet of the material impermeable to air and the foam material guarantees a greater adherence between the two contacting surfaces so as to furnish, even with the passage of time, a better adherence of the covering to the body of foam material.

Therefore, a greater service-life for the article is obtained. Besides this said second layer permits the introduction into the mould of agents for forming the catalytic barrier which achieves the aims just now stated, by reducing the thickness of the sheet of the material impermeable to air.

The freedom of movement between the fabric and the sheet of the material impermeable to air is guaranteed during the step of vacuum forming by the particular mould according to the present invention, provided with the frame 15 with rollers 18 previously described.

In fact, said rollers 18 guarantee, besides furnishing an air-tight seal, the reciprocal movement between the fabric and said sheet of the material impermeable to air.

This takes place both, thanks to the different types of friction acting between the rollers and the sheet of the material impermeable to air (rolling friction), and between upper surface of the body and the fabric (sliding friction), and thanks to the different frictional coefficients of the various materials.

Moreover, even under these conditions the adhesives deposited between the fabric and the sheet of the material impermeable to air acts as a lubricant, also reducing in the zone underlying the rollers 18 the friction between said surfaces in reciprocal motion.

Nevertheless, besides guaranteeing said freedom of reciprocal movement, the mould according to the present invention also guarantees a sufficient air-tightness.

The elasticity of said layer of adhesive, interposed between the fabric and the sheet of the material impermeable to air allows the material impermeable to air to shrink freely inside the mould while the fabric can remain in contact with the walls of the mould itself.

Thus, there is guaranteed further the capacity of said two materials, fabric and material impermeable to air, to freely move one with respect to the other.

Although several particular embodiments of an article in foam material furnished with a covering, its manufacturing process, and the device for obtaining said article through said process, have been illustrated and described, there are also intended to be comprised within their scope, all those possible variations accessible to a technician of the field.

In particular, what has to be considered as comprised within the scope of the present invention are articles in foam material furnished with a covering over the entire surface, and/or having a resistent structure of any whatsoever material on the inside, such as, for example, automotive front seat back-rests, and moulds with a double cavity, each one provided with a frame (as previously described), for manufacturing said articles provided with a covering on their entire surface and/or a resistent structure.

WHAT IS CLAIMED IS:

1.    Foam material article provided with a covering of the type comprising a fabric and a layer of material impermeable to air, characterized by the fact of comprising elastic binding means between the fabric and the material impermeable to air.

2.    Article according to claim 1, characterized by the fact that the elastic binding means comprise an adhesive.

3.    Article according to claims 1 and 2, characterized by the fact that the elastic binding means comprise microcreases in the fabric.

4.    Article according to any one of the previous claims, characterized by the fact that the elastic binding means comprise a layer of foam material adhering to the surface of the fabric facing the material impermeable to air.

5.    Process for manufacturing foam material articles provided with a covering comprising a fabric and a layer of material impermeable to air, characterized by the fact of comprising the steps of:-
a) placing a piece of fabric in a mould;
b) depositing an adhesive on said fabric;
c) doubling the fabric with a sheet of a material impermeable to air;
d) causing the fabric to line the mould by creating a vacuum in the mould itself;
e) inserting the expandable material;
f) expanding said expandable material.

6. Process according to claim 5, characterized by the fact of comprising - after step (f), the further step of cross-linking the adhesive deposited between the fabric and the sheet of the material impermeable to air.

7. Process according to claim 6, characterized by the fact of comprising the step of depositing an adhesive on the sheet of the material impermeable to air after step (d).

8. Process according to any one of the claims from 5 to 7, characterized by the fact of comprising the step of softening the sheet of the material impermeable to air through heating means before step (d).

9. Mould for manufacturing foam material articles provided with a covering, comprising a fabric and a layer of a material impermeable to air, said mould comprising a cavity, means for forming a vacuum inside said cavity, characterized by the fact of comprising consecutively, starting from the cavity itself, a continuous relief around said cavity and a frame associated to said mould, each side of said frame being substantially parallel to the sides of said cavity, each side of said frame being provided with at least one roller.

Fig.1

Fig.2

Fig.3

Fig.4

Fig.5

## EUROPEAN SEARCH REPORT

### DOCUMENTS CONSIDERED TO BE RELEVANT

| Category | Citation of document with indication, where appropriate, of relevant passages | Relevant to claim |
|---|---|---|
| | BE - A - 808 615 (BRIDGTOWN IND) <br> * Claims 1-3,8,9; pages 4-9, 13-17; figures 1,5,6 * <br> -- | 1,3,5 |
| A | GB - A - 1 458 664 (STOREY BROTHERS) | |
| A | FR - A - 2 339 016 (GRIFFINE-MARECHAL) | |
| A | GB - A - 1 423 817 (BRIDGETOWN IND.) | |
| A | GB - A - 1 465 471 (STOREY BROTHERS) | |
| A | GB - A - 1 415 852 (HAIRLOK) <br> ---- | |

**CLASSIFICATION OF THE APPLICATION (Int Cl.³)**

B 32 B 27/12
A 47 C 7/18
B 60 R 13/02
B 29 D 27/04

**TECHNICAL FIELDS SEARCHED (Int. Cl.³)**

B 32 B
A 47 C 7/18
B 60 R 13/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 31-10-1980 | BLASBAND |

EPO Form 1503.1   06.78